(19) Europäisches Patentamt
European Patent Office
Office européen des brevets

(11) Numéro de publication : **0 490 731 A1**

(12) # DEMANDE DE BREVET EUROPEEN

(21) Numéro de dépôt : **91403292.5**

(22) Date de dépôt : **05.12.91**

(51) Int. Cl.[5] : **C08L 85/02,** E04F 15/10

(30) Priorité : **14.12.90 FR 9015669**

(43) Date de publication de la demande :
**17.06.92 Bulletin 92/25**

(84) Etats contractants désignés :
**AT BE CH DE DK ES FR GB GR IT LI LU NL SE**

(71) Demandeur : **ELF ATOCHEM S.A.**
**4 & 8, Cours Michelet La Défense 10**
**F-92800 Puteaux (FR)**

(72) Inventeur : **Hubin-Eschger, Philippe**
**103 Avenue Trespoey**
**F-64000 Pau (FR)**
Inventeur : **Rousseau, Guy**
**11 Rue Diderot**
**F-64000 Pau (FR)**

(54) **Compositions notamment pour revêtement de sol à base de polyphosphazène.**

(57) L'invention concerne des compositions utilisables notamment dans le domaine des revêtements de sol.

Ces compositions comprennent comme liant un polyphosphazène.

Les revêtements fabriqués à partir de ces compositions sont particulièrement adaptés au domaine de l'aéronautique.

EP 0 490 731 A1

L'invention a pour objet des compostions destinées notamment à la préparation de revêtements de sol, constitués par un matériau non halogéné et plus précisément des revêtements de sol à base de polyphosphazène, les dits revêtements de sol étant tout particulièrement destinés à des usages dans le domaine aéronautique.

Les revêtements de sol les plus couramment utilisés sont à base de compositions comprenant un polymère halogéné et plus précisément du polychlorure de vinyle (PVC). Ces compositions conviennent dans un grand nombre d'utilisations mais les exigences de plus en plus strictes dans le domaine de l'aéronautique rendent l'utilisation de polymères halogénés de plus en plus problématique.

L'invention a donc pour objet des compositions susceptibles de conduire à des revêtements de sol utilisables dans le domaine de l'aéronautique, les dites compositions étant caractérisées en ce qu'elles comprennent un liant constitué par un polyphosphazène.

L'invention concerne plus précisément des compositions comprenant un polyphosphazène de haut poids moléculaire et plus encore un polyphosphazène susceptible d'être réticulé ou vulcanisé.

L'invention concerne encore une composition telle que définie ci-avant, comprenant des charges, en particulier des charges susceptibles d'améliorer la résistance au feu des dites compositions et des revêtements qui en dérivent, un agent ou système de réticulation ou vulcanisation et, éventuellement des additifs tels qu'agents de protection, plastifiants, pigments.

Le polyphosphazène mis en oeuvre dans les compositions conformes à l'invention peut être choisi parmi les polymères comprenant une pluralité de motifs de formule

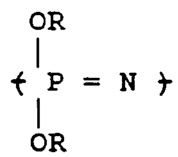

(I)

dans laquelle les symboles R, qui peuvent être identiques ou différents peuvent représenter un radical organique renfermant jusqu'à 12 atomes de carbone, et plus particulièrement un radical aryle $R_1$ éventuellement substitué par un atome d'halogène, par un radical alkyle ayant de 1 à 12 atomes de carbone ou par un radical alcoxy ayant de 1 à 6 atomes de carbone ou un radical alcényle-aryle $R_2$.

Le radical aryle $R_1$ est avantageusement un radical phényle, p.éthylphényle, p.butylphényle, p.méthoxyphényle ou chlorophényle et le radical alcényle-aryle $R_2$ est avantageusement le radical o.allyle-phényle.

D'une manière générale, on donne la préférence aux polymères comportant une majorité de substituants aryle $R_1$ et un faible taux, par exemple inférieur à 15 %, de substituants alcényle-phényle $R_2$.

Parmi ces polymères, on utilisera tout particulièrement des polymères dont la masse moléculaire en poids est supérieure à 10.000 et est de préférence comprise entre 100.000 et 2.000.000, sans que cette valeur puisse être considérée comme une limite.

La préparation de polyphosphazènes à été largement décrite dans la littérature et ne constitue pas en ellemême un objet de l'invention. A titre purement informatif, on précisera que les polyphosphazènes dont la formule a été donnée précédemment résultent en général de la substitution notamment au moyen d'arylate alcalin (correspondant à la signification de R) de polydichlorophosphazènes, lesquels pouvant être préparés de diverses manières et en particulier par polymérisation d'hexachlorocyclotriphosphazène (procédé ALLCOCK décrit par exemple dans le brevet US 3,370,020) ou par polycondensation de N-(dichlorophosphoryl) trichloro-phosphazène (procédé DE JAEGER décrit par exemple dans le brevet US 4,377,558), le contenu des deux brevets précités devant être considéré comme faisant partie de la présente description.

Lorsque les polyphosphazènes sont choisis parmi les produits susceptibles d'être réticulés ou vulcanisés ce qui représente une modalité préférentielle, et en particulier parmi les polymères comportant des substituants allyle-phényle, les compositions peuvent comprendre un agent ou système de vulcanisation constitué par du soufre éventuellement associé à un ou plusieurs activateurs ou accélérateurs ou encore et de préférence un initiateur de radicaux libres.

Parmi ces initiateurs, on mentionnera tout particulièrement les peroxydes tels que, par exemple, le peroxyde de dibenzoyle, le 2,5 diméthyl 2,5-di(t.butylperoxy) hexane, le 1,1 di t.butyl peroxy 3.3.5 triméthylcyclohexane, le peroxyde de dicumyle, le bis (t.butylperoxy) diisopropylbenzène, ou les peresters tels que par exemple le t.butylperbenzoate.

On utilise de préférence une quantité d'agent ou système de vulcanisation ou réticulation n'excédant pas 10 parties en poids pour 100 parties de polyphosphazène, cette quantité étant le plus souvent comprise entre

0.5 et 5 parties pour 100.

Les compositions conformes à l'invention comprennent avantageusement des charges de renforcement et en particulier des charges minérales améliorant en outre la résistance au feu.

Parmi ces dernières on citera en particulier les alumines, l'hydroxyde de magnésium ou le carbonate de magnésium. Parmi les alumines on retiendra notamment les alumines trihydratées.

Parmi ces dernières, on donnera la préférence aux alumines précipitées de faible granulométrie par exemple inférieure à 2 µm, et ne comportant pas d'enrobage (acide stéarique par exemple). Par contre on associera avantageusement des agents de couplage aux dites charges ou on utilisera des charges préalablement traitées par de tels agents, qui peuvent être du type silanes ou titanates organofonctionnels. Les silanes peuvent notamment consister en vinylsilanes, mercaptosilanes ou amino-silanes.

Il va de soi qu'on peut utiliser un mélange de charges, lequel pouvant n'être constitué que des charges précitées ou comprendre ces charges ainsi que d'autres charges n'ayant pas d'effet anti-feu particulier. Ainsi on peut faire appel à la silice précipitée, dans le but d'améliorer certaines propriétés mécaniques telle que la résistance à la déchirure.

D'une manière générale, les compositions peuvent renfermer jusqu'à 300 parties en poids de charges pour 100 parties de polyphosphazène, 50 % au moins en poids des charges étant choisies parmi les alumines, hydroxyde et carbonate précités.

Les compositions peuvent aussi renfermer jusqu'à 5 parties (pour 100 parties de polyphosphazène) d'un additif antioxydant pouvant par exemple être choisi parmi les dérivés phénoliques. De préférence la quantité d'additif n'excède pas 2.5 parties.

Les compositions peuvent encore renfermer un ou plusieurs stabilisants-lumière, tel que le dioxyde de titane éventuellement associé à un dérivé de la benzophénone.

En général la quantité de stabilisant-lumière n'excède pas 5 parties pour 100 parties de polyphosphazène. De préférence elle est de l'ordre de 0.5 à 2.5 parties.

Les compositions peuvent encore renfermer jusqu'à 25 parties et de préférence jusqu'à 15 parties (pour 100 parties de polyphosphazène) d'un plastifiant pouvant être choisi par exemple parmi les phosphates, polyphosphates et phosphonates.

Parmi ces produits, on citera notamment le phosphate de tricrésyle, le phosphate de triphényle, le phosphate de crésyldiphényle, le phosphate de diphényle et d'isodécyle, le phosphate de 2-éthylhexylbiphényle.

Les compositions peuvent encore renfermer les pigments et colorants habituels, à raison de 0 à 5 parties pour 100 parties de polyphosphazène.

Les compositions conformes à l'invention sont préparées par mélange de leurs constituants. On opère avantageusement sur mélangeur à cylindres par exemple sur mélangeur bi-cylindre, fonctionnant à friction et dont l'écartement permet d'obtenir un gâteau dont l'épaisseur peut être comprise entre 1 et 5 mm, le dit gâteau étant homogénéisé par ré-introduction dans le mélangeur dans le sens de la longueur c'est-à-dire perpendiculairement à l'axe des cylindres, la dite opération de malaxage et ré-introduction étant avantageusement répétée plusieurs fois, par exemple de 4 à 10 fois.

L'introduction initiale des constituants est avantageusement faite dans l'ordre : polyphosphazène/agents de protection, pigment, plastifiant, silice /charges anti-feu/peroxyde, éventuellement dilué dans une petite quantité de charges.

D'une manière générale la température de l'opération de mélangeage telle que décrite ci-avant est de l'ordre de 20 à 80°C, cette température pouvant être obtenue et maintenue par refroidissement du mélangeur, par exemple par circulation d'eau.

A l'issue des opérations précédentes, il est avantageux de laisser reposer le gâteau par exemple pendant 24 heures puis de procéder à un dernier passage dans le mélangeur, réglé de manière à donner une feuille d'épaisseur désirée, en ayant supprimé la friction entre les cylindres.

Les compositions peuvent être vulcanisées ou réticulées à une température généralement comprise entre 120 et 220 °C, dans un moule dont la géométrie correspond au profil désiré pour les plaques de revêtement, le moulage s'effectuant généralement sous une pression pouvant être comprise entre $10^7$ et $3.10^7$ Pa.

Les compositions conformes à l'invention sont particulièrement adaptées à la réalisation de revêtements de sol de type aéronautique, les dits revêtements répondant à l'ensemble des recommandations dans ce domaine.

Il va de soi que la mention de ce domaine d'utilisation est donnée à titre indicatif et ne saurait en aucun cas limiter la portée de la présente invention, les revêtements de sols constituant également, en eux-mêmes, un objet de l'invention. De même il doit être compris que la notion de revêtement de sol n'est qu'un exemple d'application et que l'invention s'étend à tout autre type de revêtement ou mode d'application dudit revêtement.

Les exemples suivants, dans lesquels les parties sont pondérales, illustrent l'invention.

**EXEMPLE 1**

Dans un mélangeur bi-cylindres, refroidi à l'eau, et dont le rapport de friction est de 1,33, on introduit successivement :

– 100 parties de polyphosphazène de formule I de masse moléculaire (en poids - diffusion de la lumière : 1.200.000) : 90 % des symbles R représentant un radical phényle et 10 % un radical o.allylphényle.

– 110 parties d'alumine trihydratée de granulométrie moyenne 1,5 à 2 μm.

– 30 parties de silice précipitée, de granulométrie moyenne 0,02 μm.

– 2 parties de peroxyde dicumyle.

La température du mélange étant maintenue entre 50 et 70°C, et l'écartement des cylindres étant réglé à 1,5-2,5 mm, on racle le gâteau formé à la sortie des cylindres et le réintroduit dans le mélangeur dans le sens de la longueur, cette opération étant répétée 6 fois.

Après 24 heures de repos, on réduit l'écartement des cylindres à environ 1 mm et fait à nouveau passer le gâteau dans le mélangeur dont la friction a été supprimée, pour en tirer une feuille d'épaisseur de 3 à 5 mm.

Cette feuille est placée dans un moule et le moulage s'effectue sous une pression (pression de fermeture du moule) de 2, $2.10^7$ Pa à une température de 170°C pendant 12 mm. On forme ainsi des dalles de 200 x 200 x 1,5 mm.

L'ensemble des caractéristiques, des normes, des recommandations en matière aéronautique et des valeurs obtenues avec ces dalles sont rassemblées dans le tableau I.

**TABLEAU I**

| CARACTERISTIQUES | NORMES | RECOMMANDATIONS | VALEURS OBTENUES |
|---|---|---|---|
| **Epaisseur** | | | 1,5 mm |
| **Densité** | | | 1,68 |
| **Masse au m2** | | < 2 Kg | < 2 Kg (dalle grainée) |
| **Stabilité Dimensionnelle** | NFT 54105 | < 0,5 % | 0,2 % |
| **Résistance à la Déchirure** | ISO 34-1979 | | 14N/mm |
| **Résistance à l'abrasion** | TABER 1000 cycles Meule H18/1Kg | Δ P < 450 mg | 316 mg |
| **Charge Rupture** | DIN 53455 | > 9N/mm | 13.4N/mm |
| **Allongement Rupture** | DIN 53455 | > 40 % | 50 % |
| **Dureté SHORE A** | DIN 53505 | 77 ± 10 | 78 |
| **I.O.L** | NFT 51071 | Aucune | 49 |
| **Inflammabilité** | FAR 25853 b | $t < 15_s$<br>L < 203 mm | t = Os<br>L = 10 mm |
| **Résistance au feu** | ATS 1000 - 001 issue 4 | | PASSE |

I.O.L = Indice d'oxygène limite :

Ces mêmes dalles sont soumises à des tests de pyrolyse sans flamme et avec flamme, dans une chambre N.B.S selon la norme ASTM E 662.

Les résultats sont rassemblés dans le tableau II.

**TABLEAU II**

| PYROLYSE SANS FLAMME | |
|---|---|
| TEMPS (mn) | DENSITE OPTIQUE DS |
| 1 | 0 |
| 2 | 0 |
| 3 | 0 |
| 4 | 0,1 |
| 5 | 0,4 |
| 6 | 0,7 |
| 7 | 1,9 |
| **PYROLYSE AVEC FLAMME** | |
| TEMPS (mn) | DENSITE OPTIQUE DS |
| 1 | 0,1 |
| 2 | 1,4 |
| 3 | 6,4 |
| 4 | 41,9 |
| 5 | 94 |
| 6 | 120,2 |
| 7 | 128,3 |

L'analyse des produits de combustion de ces dalles, conduit aux résultats rassemblés dans le tableau III.

TABLEAU III

| RESULTATS GAZ TESTES | | SPECIFICATION ATS 1000-001 issue 4 (ppm maxi autorisés en 240 s) | OBTENUS |
|---|---|---|---|
| CO | F | 3500 | 200 |
| | NF | 3500 | 0 |
| NO + $NO_2$ | F | 100 | 26 |
| | NF | 100 | 0 |
| $SO_2$ + $H_2S$ | F | 100 | 0 |
| | NF | 100 | 0 |
| HF | F | 50 | 0 |
| | NF | 50 | 0 |
| HCl | F | 500 | 0 |
| | NF | 500 | 0 |
| HCN | F | 150 | 1 |
| | NF | 150 | 0 |

F : Pyrolyse avec flamme

NF : Pyrolyse sans flamme.

## EXEMPLE 2

Dans le mélangeur bi-cylindres de l'exemple 1, on introduit successivement :

1. -100 parties du polyphosphazène de l'exemple 1
2. - 25 parties de silice précipitée (exemple 1)
   5 partie de $TIO_2$
   0,5 partie de dérivé phénolique commercialisé sous la marque déposée IRGANOX 1010
   1 partie de phosphate de marque déposée SANTICIZER 141
3. - 110 parties d'alumine trihydratée (exemple 1)
4. - 1 partie de bis(t.butylperoxy)diisopropylbenzène.

Le mélange et le moulage sont effectués en suivant le mode opératoire décrit dans l'exemple 1, le moulage durant cependant 19 mm.

Les résultats sont rassemblés dans le tableau IV.

**TABLEAU IV**

| CARACTERISTIQUES | NORMES | RECOMMANDATIONS | VALEURS |
|---|---|---|---|
| Epaisseur | | | 1,5 mm |
| Densité | | | 1,61 |
| Masse au m2 | | < 2 Kg | 2 Kg (dalle grainé) |
| Stabilité Dimensionnelle | NFT 54105 | < 0,5 % | 0,5 % |
| Résistance à l'abrasion | TABER 1000 cycles Meule H18/1 Kg | Δ P 450 mg | 290 mg |
| Résistance au poinçonnement | | < 10/100 mm | <10/100 mm |
| Résistance à la rayure | Scléromètre | > 500 | > 500 |
| Résistance à l'écrasement | | Aucune | BON |
| Charge Rupture | DIN 53455 | > 9N/mm | 9,2N/mm |
| Allongement Rupture | DIN 53455 | > 40 % | 110 % |
| Dureté SHORE A | DIN 53505 | 77 ± 10 | 81 |
| I.O.L | | Aucune | 49 |
| Tenue à la lumière | ISO 4892 | > 5 | 6 |

## EXEMPLE 3

Dans le mélangeur de l'exemple 1 on introduit successivement :

– 100 parties du polyphosphazène de l'exemple 1
– 0 ou 10 parties du phosphate de l'exemple 2
– 150 parties d'alumine trihydratée de l'exemple 1
– 2 parties de peroxyde de dicumyle.

Après les opérations de mélange effectués selon le mode opératoire décrit dans l'exemple 1, on moule pendant 10 mn à 170° sous $2{,}2.10^7$ Pa (pression de fermeture) des dalles à 200 x 200 x 1,5 mm.

On procède sur ces dalles aux mesures dont les résultats sont rassemblés dans le tableau V.

TABLEAU V

| CARACTERISTIQUES | RESULTATS sans plastifiant | RESULTATS avec plastifiant |
|---|---|---|
| Module à 30 % (MPa) | 4,1 | 0,5 |
| F. Rupture (MPa) | 7 | 3,5 |
| Allong. Rupture (%) | 57 | 260 |
| Dureté SHORE A | 89 | 55 |
| I.O.L. | 62,2 | 44,2 |
| Tg (°C) | 0,5 | -13 |

## Revendications

**1./** Compositions susceptibles d'être utilisées pour la réalisation de revêtements de sol utilisables dans le domaine aéronautique, caractérisées en ce qu'elles comprennent un liant constitué par un polyphosphazène.

**2./** Compositions selon la revendication 1, caractérisées en ce que le polyphosphazène est un polyphosphazène de haut poids moléculaire, susceptible d'être réticulé ou vulcanisé.

**3./** Compositions selon l'une quelconque des revendications 1 ou 2, caractérisées en ce qu'elles comprennent, outre le liant, des charges de renforcement susceptibles en outre d'améliorer la résistance au feu des dites compositions et des revêtements qui en dérivent, un agent ou système de réticulation ou de vulcanisation et éventuellement d'autres additifs tels que agent de protection, plastifiant, pigment.

**4./** Compositions selon l'une quelconque des revendications 1 à 3, caractérisées en ce que le polyphosphazène est choisi parmi les polymères comportant une pluralité de motifs de formule :

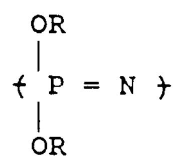

(I)

dans laquelle les symboles R, qui peuvent être identiques ou différents peuvent représenter un radical organique renfermant jusqu'à 12 atomes de carbone, et plus particulièrement un radical aryle $R_1$ éventuellement substitué par un atome d'halogène, par un radical alkyle ayant de 1 à 12 atomes de carbone ou par un radical alcoxy ayant de 1 à 6 atomes de carbone ou un radical alcényle-aryle $R_2$.

**5./** Compositions selon la revendication 4, caractérisées en ce que dans la formule I,R représente majoritairement l'un des radicaux aryle $R_1$ tels que phényle, p.éthylphényle, p.butylphényle, chlorophényle ou p.méthoxyphényle et à un taux inférieur à 15 %, un radical alcényle-phényle $R_2$ tel qu'o.allylphényle.

**6./** Compositions selon l'une quelconque des revendications 1 à 5, caractérisées en ce que le polyphosphazène présente une masse moléculaire en poids supérieure à 10.000 et de préférence comprise entre 100.000 et 2.000.000.

**7./** Compositions selon la revendication 3, caractérisées en ce que l'agent ou le système de vulcanisation ou réticulation est choisi dans le groupe constitué par le soufre, éventuellement associé à un ou plusieurs activateurs ou accélérateurs et les initiateurs de radicaux libres et en particulier les peroxydes ou les peresters.

**8./** Compositions selon la revendication 7, caractérisées en ce qu'elles contiennent jusqu'à 10 parties en poids d'agent ou de système de vulcanisation ou de réticulation pour 100 parties de polyphosphazène.

**9./** Compositions selon l'une quelconque des revendications 1 à 8, caractérisées en ce que les charges

renforçantes susceptibles en outre d'améliorer la résistance au feu sont choisies dans le groupe constitué par les alumines, l'hydroxyde de magnésium et le carbonate de magnésium.

**10./** Compositions selon la revendication 9, caractérisées en ce qu'elles renferment pour 100 parties en poids de polyphosphazène, jusqu'à 300 parties de charges dont la moitié au moins est constituée de charges renforçantes améliorant la résistance au feu.

**11./** Compositions selon la revendication 10, caractérisées en ce qu'elles comprennent une ou plusieurs des charges renforçantes améliorant la résistance au feu précitées et de la silice précipitée.

**12./** Application des compositions selon l'une quelconque des revendications 1 à 11 à la fabrication de matériaux de revêtement après mélange des constituants et moulage.

**13./** Les matériaux de revêtements formés à partir des compositions selon l'une quelconque des revendications 1 à 11.

Office européen des brevets

# RAPPORT DE RECHERCHE EUROPEENNE

Numero de la demande

EP 91 40 3292

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | US-A-4 145 479 (B. E. ADAMS ET AL)<br>* colonne 1, ligne 19 - colonne 2, ligne 19; revendications 1-9; exemples 4-6 *<br>--- | 1-13 | C08L85/02<br>E04F15/10 |
| Y | EP-A-0 313 863 (HERCULES INCORPORATED)<br>* page 2, ligne 9 - ligne 17 *<br>--- | 1-13 | |
| Y | WORLD PATENTS INDEX LATEST<br>Derwent Publications Ltd., London, GB;<br>AN 87-096646<br>& JP-A-62 043 436 (JAPAN SYNTHETIC RUBBER)<br>* abrégé *<br>--- | 1-13 | |
| A | CHEMICAL ABSTRACTS, vol. 108, no. 16, 18 Avril 1988, Columbus, Ohio, US;<br>abstract no. 133125Q,<br>H.R.PENTON: 'polyphosphazenes: performance polymers for specialty aplications & acs symp. ser. 1988, 360 (inorg. organomet. polym.), 277-282'<br>page 58 ;colonne 1 ;<br>* abrégé *<br>----- | 1 | |
| | | | **DOMAINES TECHNIQUES RECHERCHES (Int. Cl.5 )** |
| | | | C08L<br>E04F<br>C08G |

Le présent rapport a été établi pour toutes les revendications

| Lieu de la recherche | Date d'achèvement de la recherche | Examinateur |
|---|---|---|
| LA HAYE | 26 MARS 1992 | KLIER E.K. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)